# FASCICULE DE BREVET EUROPEEN

(11) **EP 2 108 558 B1**
(45) Date de publication et mention de la délivrance du brevet: **12.06.2019**
(21) Numéro de dépôt: 09157674.4
(22) Date de dépôt: 09.04.2009
(51) Int. Cl.: B60W 10/26, B60W 30/18, H02J 7/14, B60W 10/08, B60W 20/00

(54) **Procede et dispositif de controle d'une surcharge energetique**
Verfahren und Vorrichtung zur Kontrolle einer energetischen Belastung
System and method for controlling an energy overload

(30) Priorité: 10.04.2008 FR 0852397
(43) Date de publication de la demande: 14.10.2009
(73) Titulaire: PSA Automobiles SA, 78300 Poissy (FR)
(72) Inventeur: Migaud, Melaine, 75012 Paris (FR); Dollinger, Nicolas, 78500 Sartrouville (FR); Robart, Nicolas, 92130 Issy Les Moulineaux (FR); Mercier Calvairac, Fabien, 75010 Paris (FR)

(56) Documents cités:
- DE-A- 4 430 670
- JP-A- 2004 120 865
- US-A1- 2005 088 139
- US-A1- 2007 029 119
- US-B2- 6 889 126

## Description

L'invention concerne un procédé et un dispositif de contrôle d'une surcharge énergétique dans un système de véhicule hybride qui comporte un stockeur électrique et une machine électrique. Le stockeur électrique contribue à satisfaire une demande de surcharge énergétique, par exemple en phase d'accélération du véhicule, en fournissant de l'énergie à la machine électrique qui fonctionne alors en mode moteur pour renforcer le couple du moteur thermique.

On connaît déjà des systèmes de contrôle de la force d'entraînement d'un véhicule hybride. Par exemple, le document US6889126 divulgue un contrôleur qui fournit de l'énergie électrique à une machine électrique sans excéder la puissance disponible dans le stockeur. En se limitant aux seules capacités du stockeur, ce document ne tire pas partie de l'état du véhicule.

On connaît également du document DE4430670, un système conforme au préambule de la revendication 1 et 3.

Toutefois ce système ne permet pas de réduire au fur et à mesure la puissance maximale de la machine électrique en évitant des transitions brusques de la puissance utilisable.

Pour remédier aux problèmes de l'état antérieur de la technique, un objet de l'invention est un procédé de contrôle d'une surcharge énergétique dans un système de véhicule hybride qui comporte un stockeur électrique et une machine électrique, conforme à l'objet de la partie caractérisante de la revendication 1

Particulièrement, dans la première étape le potentiel de récupération est estimé à partir de l'énergie cinétique du véhicule.

Un objet de l'invention est aussi un dispositif de contrôle d'une surcharge énergétique dans un système de véhicule hybride qui comporte un stockeur électrique et une machine électrique, conforme à l'objet de la revendication 3.

Particulièrement, le premier composant est agencé pour estimer le potentiel de récupération à partir de l'énergie cinétique du véhicule.

L'invention sera mieux comprise à la lecture de la description qui suit et à l'examen des figures qui l'accompagnent. Ces figures ne sont données qu'à titre illustratif et nullement limitatif de l'invention. Elles montrent :
- figure 1 : une représentation schématique des éléments essentiels d'un véhicule hybride pour mettre en oeuvre l'invention ;
- figure 2 : un schéma bloc montrant une première stratégie de limitation de surcharge ;
- figure 3 : une courbe montrant une énergie récupérable en fonction d'un état du véhicule ;
- figures 4 et 5 : des schémas bloc montrant une deuxième et une troisième stratégie de limitation de surcharge ;
- figure 6 : une courbe montrant l'évolution de l'énergie disponible en fonction de la puissance autorisée ;
- figure 7 et figure 8 : un logigramme montrant des étapes de procédé conformes à l'invention.

Les éléments identiques conservent la même référence d'une figure à l'autre.

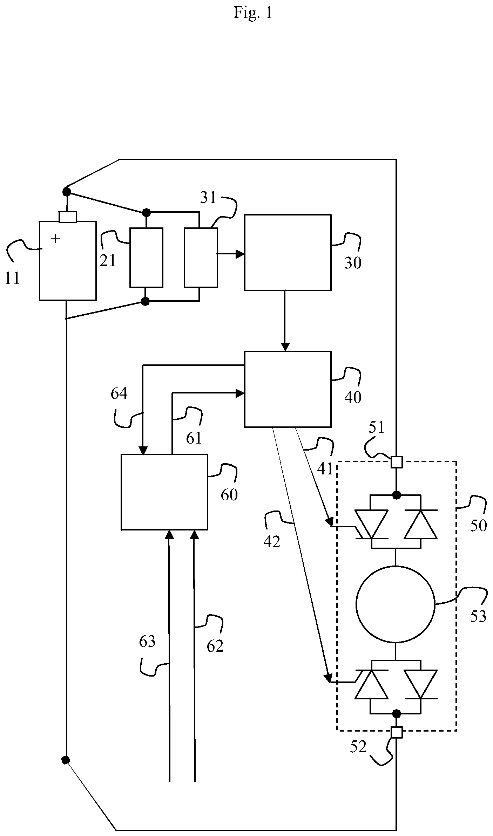

En référence à la figure 1, un véhicule hybride comprend un stockeur électrique 11 constitué d'une batterie, de super capacités ou de tout autre élément apte à stocker de façon réversible de l'énergie électrique. Divers consommateurs électriques 21 tels que les phares d'éclairage, les éléments de chauffage et de climatisation du véhicule, les organes de pilotage de la boîte de vitesses, sont branchés aux bornes du stockeur électrique 11 et consomment l'énergie électrique dont ils ont besoin au moment opportun. Un convertisseur 50 réversible d'énergie électrique en énergie mécanique consomme de l'énergie électrique fournie par le stockeur électrique dans différents cas de vie. Lorsque le véhicule fonctionne avec le moteur thermique, le stockeur électrique apporte parfois un complément d'énergie pour améliorer les performances, par exemple en cas d'une demande de surcharge énergétique que l'on peut nommer boost pour la circonstance en hommage au terme en langue étrangère de signification identique pour accélérer le véhicule. Le convertisseur réversible 50 fournit de l'énergie au stockeur électrique notamment lorsque le véhicule est en décélération ou en pente descendante, mais cela ne suffit pas nécessairement à assurer un bilan énergétique nul. Le convertisseur réversible 50 doit aussi fournir de l'énergie électrique pour recharger le stockeur électrique 11 à d'autres moments en mettant à contribution le moteur thermique.

Le convertisseur réversible 50 comprend une borne 51 reliée au pôle positif du stockeur électrique 11 et une borne 52 reliée au pôle négatif du stockeur électrique 11. Entre les bornes 51 et 52, le convertisseur réversible 50 comprend par exemple une machine électrique 53 qui fournit de l'énergie mécanique en mode moteur lorsque le convertisseur réversible 50 est commandé par un élément de signal 41 et absorbe de l'énergie mécanique en mode génératrice pour charger le stockeur électrique 11 lorsque le convertisseur réversible 50 est commandé par un élément de signal 42. Les éléments de signaux 41 et 42 sont générés par un module généralement électronique 40. Le module 40 établit les valeurs des éléments de signaux 41 et 42 en fonction d'une consigne de couple à fournir ou à absorber par la machine électrique 53. Pour ce faire, le module 40 reçoit diverses commandes, par exemple des unités de freinage ou des unités d'accélération du véhicule ou encore d'un module généralement électronique 30 qui est agencé pour recevoir un niveau de charge du stockeur 11 depuis un capteur 31 qui, de façon connue, mesure la tension aux bornes du stockeur électrique 11 et estime son impédance à partir d'un courant électrique traversant le stockeur électrique 11. Le module 40 reçoit plus particulièrement un signal 61 de contrôle commande d'un module généralement électronique 60. Le module 60 est agencé pour assurer la robustesse des prestations dynamiques du véhicule. Comme nous allons le voir dans la suite de la description, le signal 61 contient une consigne d'énergie ou de puissance à consommer par le convertisseur réversible 50 à partir du stockeur 11 suite à une demande de surcharge énergétique pour ajouter le couple de la machine électrique au couple du moteur thermique et pousser ainsi l'accélération.

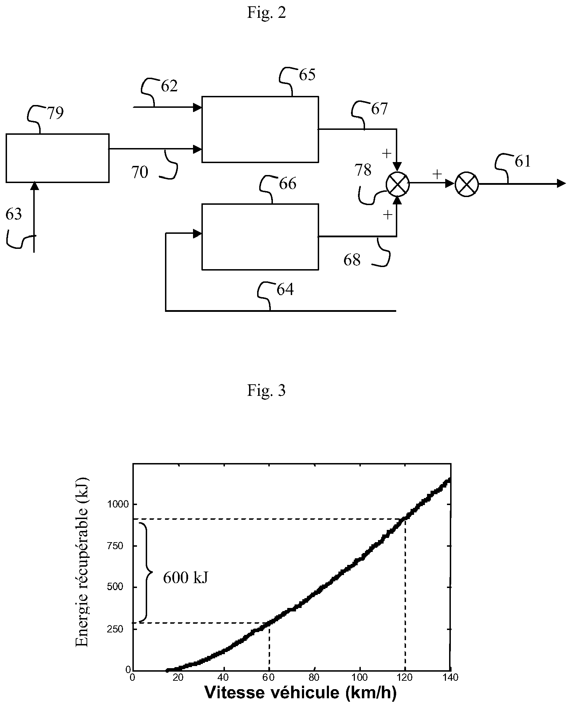

En référence à la figure 2, le module 60 comprend un composant 65 agencé pour estimer un potentiel de récupération comme nous allons l'expliquer plus loin en référence à la figure 3. Le module 60 reçoit en entrée un signal 62 qui indique une valeur de vitesse instantanée du véhicule et un signal 70 qui indique une détection de demande de surcharge énergétique. Le signal 70 reproduit directement un signal 63 lorsque, par exemple, le signal 63 est issu d'une fin de course en butée d'accélérateur qui indique une volonté du conducteur d'accélérer pied au plancher. Alternativement, un composant 79 génère le signal 70 en traitant le signal 63 lorsque, par exemple, le signal 63 mesure un degré d'enfoncement de la pédale d'accélérateur. Un composant 66 reçoit en entrée un signal 64 dont les valeurs positives indiquent une énergie rechargée dans le stockeur 11 par le convertisseur 50, par exemple en phases de ralentissement du véhicule par récupération d'énergie cinétique sous forme électrique ou en régime de croisière en suralimentant le moteur thermique à vitesse sensiblement constante, de façon à produire du couple utile à la machine électrique pour recharger volontairement le stockeur 11.

Le composant 65 génère un signal 67 qui indique un potentiel de récupération énergétique. Le composant 66 génère un signal 68 qui indique une énergie rechargée dans le stockeur 11 avant que le signal 70 indique une détection de demande de surcharge énergétique. Un composant 78 permet de sommer les signaux 67 et 68 pour donner le signal 61 qui représente alors une valeur d'énergie utilisable pour améliorer les performances. Dans ce cas, le module 40 reçoit le signal 61 pour le faire intervenir dans son système de régulation propre en tant que limite d'énergie à consommer, consigne d'énergie électrique à transformer en énergie de couple ou autre.

En référence à la figure 3, on explique à présent plus en détails une stratégie d'optimisation de la performance pour un véhicule hybride parallèle ou à dérivation de puissance dans le cadre de l'invention.

Le principe est de limiter l'énergie utilisable pour l'accélération de façon à rendre les prestations de performance robustes lors de demandes de surcharge énergétique (boost en langue étrangère).

L'énergie utilisable pour l'accélération via le système d'entraînement réversible ne doit pas excéder la quantité d'énergie que l'on saura récupérer en revenant dans les conditions initiales.

L'énergie utilisable peut provenir soit des phases de décélération du véhicule, soit de l'autre système de traction (recharge du stockeur par le moteur thermique) durant les phases de roulage (hors boost) entre deux demandes d'accélération dynamiques.

L'énergie cinétique récupérable en décélération est quantifiée à partir d'un modèle de simulation de véhicule ou de mesures sur un véhicule réel. En supposant une décélération moyenne cohérente avec un roulage dynamique, il est possible d'évaluer l'énergie récupérable pour chaque vitesse tel que la courbe de la figure 3 le montre.

Ainsi dans l'exemple illustré par la figure 3, nous voyons qu'une décélération de 120 à 60 km/h, nous permet de récupérer 600 kJ lors du freinage. Par conséquent, nous autorisons la dépense de 600 kJ d'énergie électrique lors d'une accélération de 60 à 120 km/h.

Ne pouvant connaître à l'avance l'énergie récupérable en fin d'accélération, celle-ci est calculée dynamiquement en fonction de l'évolution de la vitesse du véhicule et vient s'ajouter à une réserve d'énergie disponible pour l'accélération.

Au début de l'accélération cette réserve que nous appelons réserve a, est donc vide et s'accroît au fur et à mesure de l'augmentation de la vitesse. Dans l'exemple, la réserve vaut 0 kJ à 60 km/h, 300 kJ à 90 km/h et 600 kJ à 120 km/h.

L'énergie statistiquement obtenue par recharge entre deux demandes d'accélérations avec surcharge énergétique (boost), est quantifiée de la façon suivante.

La réserve a étant vide à l'instant initial, on comprend que la chaîne de traction réversible ne peut pas participer à la traction au début de l'accélération si seule cette énergie est disponible. Il est donc nécessaire de faire appel à une deuxième réserve qui sera rechargée par le moteur thermique entre deux accélérations et qui permettra d'initier la surcharge énergétique (boost).

A partir d'un temps minimal statistique entre deux accélérations, il est possible d'évaluer l'énergie de recharge que peut fournir le moteur thermique durant ces phases.

Ainsi dans notre exemple, si ce temps est estimé à 2 s sur un système permettant une recharge de 50 kW, 100 kJ peuvent être systématiquement rechargés entre deux demandes d'accélérations.

Cette deuxième réserve que nous appelons réserve b peut ainsi représenter jusqu'à 100 kJ. Il est cependant préférable de la minimiser pour en réduire l'impact sur la consommation lors des phases de recharge.

Comme il ressort de la suite de la description, un bon compromis sur la taille de cette réserve est obtenu en s'assurant que dans les différentes configurations d'accélérations possibles, la demande de puissance n'est pas limitée par cette contrainte dans les premières secondes de l'accélération.

Le dispositif illustré sur la figure 2, permet d'exploiter le principe ci-dessus énoncé en limitant l'énergie utilisable lors de l'accélération, à la somme de l'énergie récupérable en revenant à l'état initial (réserve a) et l'énergie statistiquement obtenue par recharge entre deux demandes d'accélérations (réserve b).

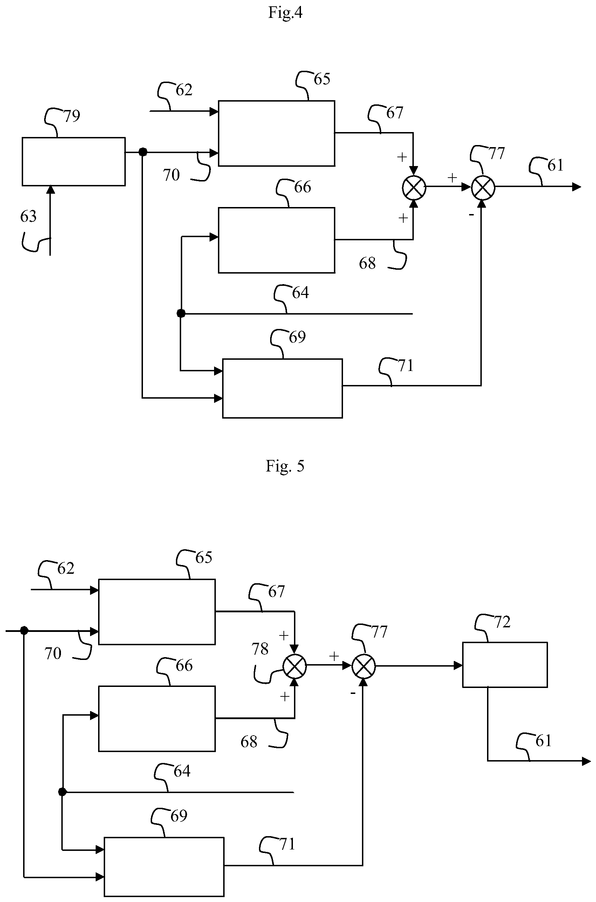

En référence à la figure 4, le module 60 comprend un composant 69 agencé pour calculer un cumul énergétique dépensé à partir d'une puissance instantanée indiquée par les valeurs négatives du signal 64 tant que la demande de surcharge énergétique est détectée par le signal 70. Le composant 69 génère un signal 71 qui représente l'énergie qui a été dépensée à chaque instant depuis le début de la détection de demande de surcharge énergétique. Le signal 61, élaboré dans ce cas au moyen d'un composant 77 qui soustrait le signal 71 à la somme des signaux 67 et 68, représente alors une énergie utilisable restante.

Dans l'exemple de réalisation illustré, la détection d'une demande de surcharge énergétique (boost en langue étrangère), constitue l'instant initial du calcul de l'énergie utilisable par la chaîne réversible de production d'énergie cinétique, c'est-à-dire la chaîne qui comprend la machine électrique. A ce moment, comme vu ci-dessus, la réserve a est vide et la réserve b vaut 100 kJ. Au fur et à mesure que la vitesse augmente, l'énergie utilisable à partir de la réserve a, s'accroît pour atteindre 100 kJ à 60 km/h, 400 kJ à 90 km/h et 700 kJ à 120 km/h.

Notons que pendant la période d'accélération du véhicule, la chaîne réversible consomme une part de l'énergie de la réserve b, de sorte que l'énergie utilisable diminue. Le dispositif illustré par la figure 3 permet de calculer l'énergie utilisable restante en soustrayant à l'énergie utilisable, la dépense énergétique de la chaîne réversible.

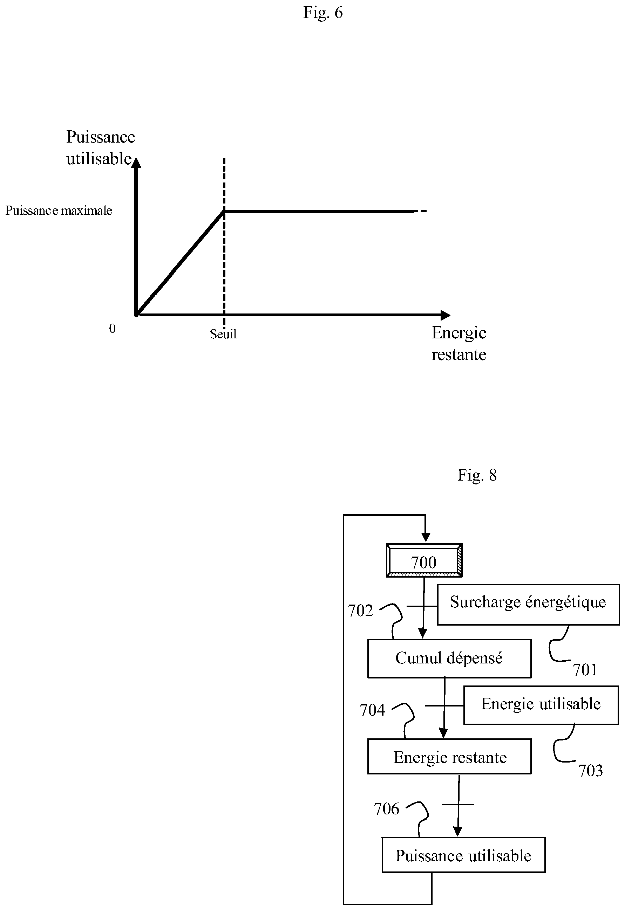

En référence à la figure 5, le module 60 comprend un composant 72 agencé pour calculer une puissance utilisable, par exemple comme expliqué plus loin dans la description en référence à la figure 6. Le composant 72 reçoit en entrée la somme des signaux 67 et 68, de laquelle est soustrait le signal 71 de façon à générer le signal 61 qui dans ce cas, indique une valeur de puissance autorisée directement exploitable par le module 40.

En référence à la figure 6, on représente l'énergie restante en abscisse et la puissance autorisée ou puissance utilisable pour la surcharge en ordonnée.

Lorsque l'énergie restante est supérieure à un seuil, la puissance utilisable est maximale. Dès que l'énergie restante devient inférieure au seuil, la puissance utilisable est limitée de manière proportionnelle à l'énergie restante. Elle est positionnée à zéro lorsque l'énergie restante vaut zéro et à puissance maximale lorsque l'énergie restante est égale au seuil.

Le seuil est le plus bas possible pour permettre d'offrir la pleine puissance la plus grande partie du temps. Sa seule fonction est de réduire progressivement la puissance de traction disponible en fin de réserve.

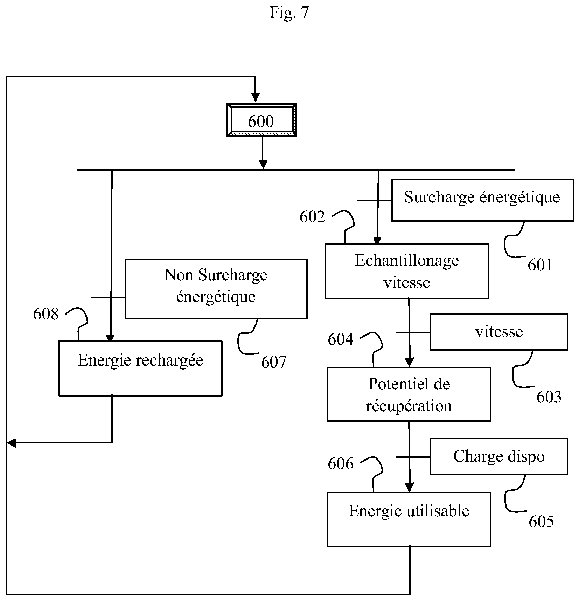

En référence à la figure 7, un procédé de contrôle d'une surcharge énergétique dans le système de véhicule hybride qui comporte un stockeur électrique et une machine électrique, part d'une étape de référence 600 à partir de laquelle, une absence de demande de surcharge valide une transition 607 et une détection de demande de surcharge valide une transition 601.

La transition 601 active une étape 602 qui échantillonne la vitesse tant que la demande surcharge est valide.

Une étape 604 est activée par une transition 603 indiquant une valeur de vitesse instantanée du véhicule obtenue par l'échantillonnage de l'étape 602 activée par la transition 601 qui indique la détection de demande de surcharge énergétique. L'étape 604 est ordonnancée pour estimer un potentiel de récupération en fonction de la valeur indiquée par la première transition, c'est-à-dire de la vitesse.

Une étape 608 est activée par la transition 607 indiquant une absence de demande de surcharge énergétique. L'étape 608 est ordonnancée pour estimer une énergie rechargée dans le stockeur électrique entre deux surcharges énergétiques.

Une transition 605 est validée par une valeur de charge disponible qui résulte de la dernière valeur d'énergie rechargée qui a été calculée dans l'étape 608 avant que la transition 601 soit validée. Une validation de la transition 605 active une étape 606 à la suite de l'étape 604. L'étape 606 est ordonnancée pour générer une limite d'énergie utilisable pour la surcharge énergétique comme étant égale à une somme du potentiel de récupération et de l'énergie rechargée.

En référence à la figure 8, le procédé part de l'étape de référence 600 ou d'une autre étape de référence 700 pour activer une étape 702 par la transition 601 ou par une transition 701 indiquant une détection de demande de surcharge énergétique. L'étape 702 est ordonnancée pour calculer un cumul énergétique dépensé en fonction d'une puissance dépensée pendant la surcharge.

Une étape 704 est activée à la suite de l'étape 702, particulièrement par une transition 703 validée par l'énergie utilisable qui a été calculée ou estimée dans l'étape 606. L'étape 704 est ordonnancée pour générer une valeur d'énergie restante de façon à limiter l'énergie utilisable pour la surcharge énergétique en soustrayant le cumul énergétique dépensé de la somme du potentiel de récupération et de l'énergie rechargée.

Une étape 706, activée à la suite de l'étape 704, est ordonnancée pour calculer une puissance utilisable en fonction de l'énergie restante.

Dans l'étape 706, lorsque l'énergie restante est supérieure à un seuil, la puissance utilisable est maximale. Dès que l'énergie restante devient inférieure au seuil, la puissance utilisable est limitée de manière proportionnelle à l'énergie restante. Elle est positionnée à zéro lorsque l'énergie restante vaut zéro et à puissance maximale lorsque l'énergie restante est égale au seuil. Avantageusement cette étape permet de faire varier la puissance progressivement pour ne pas nuire à l'agrément du véhicule.

Dans l'étape 604, le potentiel de récupération est estimé à partir de l'énergie cinétique du véhicule en se basant sur les observations de la courbe représentée en figure 3.

En donnant le maximum de puissance électrique immédiatement et en maintenant ce maximum jusqu'à ce que la surface délimitée soit représentative d'un seuil d'énergie, il n'est pas nécessaire de connaître la durée d'accélération que désire faire le conducteur. L'énergie disponible pour la chaîne réversible limite simplement le temps d'application de la puissance maximale.

La puissance utilisable pour améliorer les prestations dynamiques du véhicule est déterminée de façon à appliquer le maximum de puissance dès le début de la demande d'accélération. Peu importe alors que l'apport en couple de la chaîne réversible soit limité dans le temps par une quantité disponible d'énergie ou que la pleine puissance ne puisse pas être appliquée jusqu'à la fin de l'accélération. L'attente du conducteur qui concerne la capacité d'accélération du véhicule, directement liée au couple que sait fournir la chaîne de traction, est satisfaite. Un degré appréciable de robustesse et d'optimisation des performances dynamiques du véhicule, est ainsi atteint.

## Revendications

1. Procédé de contrôle d'une surcharge énergétique dans un système de véhicule hybride qui comporte un stockeur électrique et une machine électrique, comprenant:
- une première étape (604) activée par une première transition (603) indiquant une valeur de vitesse instantanée du véhicule et une deuxième transition (601) indiquant une détection de demande de surcharge énergétique, ordonnancée pour estimer un potentiel de récupération en fonction de la valeur indiquée par la première transition;
- une deuxième étape (608) activée par une troisième transition (607) indiquant une absence de demande de surcharge énergétique, ordonnancée pour estimer une énergie rechargée dans le stockeur électrique ;
- une troisième étape (606) activée à la suite de la première étape (604), ordonnancée pour générer une limite d'énergie utilisable pour la surcharge énergétique comme étant égale à une somme du potentiel de récupération et de l'énergie rechargée,
**caractérisée en ce qu'**il comprend :
- une quatrième étape (702) activée par une quatrième transition (701) indiquant une détection de demande de surcharge énergétique, ordonnancée pour calculer un cumul énergétique dépensé en fonction d'une puissance dépensée pendant la surcharge ;
- une cinquième étape (704) activée à la suite de la quatrième étape (702), ordonnancée pour générer une valeur d'énergie restante de façon à limiter l'énergie utilisable pour la surcharge énergétique en soustrayant le cumul énergétique dépensé de la somme du potentiel de récupération et de l'énergie rechargée, et **en ce qu'**il comprend :
- une sixième étape (706) ordonnancée pour calculer une puissance utilisable en fonction de l'énergie restante, dans laquelle :
- lorsque l'énergie restante est supérieure à un seuil, la puissance utilisable est maximale;
- lorsque l'énergie restante est inférieure au seuil, la puissance utilisable est limitée de manière proportionnelle à l'énergie restante.

2. Procédé selon la revendication précédente, **caractérisé en ce que** dans la première étape (604), le potentiel de récupération est estimé à partir de l'énergie cinétique du véhicule.

3. Dispositif de contrôle d'une surcharge énergétique dans un système de véhicule hybride qui comporte un stockeur électrique (11) et une machine électrique (53), comprenant :
- un premier composant (65) recevant en entrée un premier signal (62) pour indiquer une valeur de vitesse instantanée du véhicule et un deuxième signal (70) pour indiquer une détection de demande de surcharge énergétique, agencé pour estimer un potentiel de récupération en fonction de la valeur indiquée par le premier signal lorsque le deuxième signal indique une demande de surcharge ;
- un deuxième composant (66) agencé pour estimer une énergie rechargée avant la demande de surcharge énergétique ;
- un troisième composant (78) recevant en entrée un troisième signal (67) pour indiquer le potentiel de récupération estimé et un quatrième signal (68) pour indiquer l'énergie rechargée estimée, agencé pour générer un cinquième signal (61) de façon à limiter une énergie utilisable pour la surcharge énergétique comme étant égale à une somme du troisième et du quatrième signal; **caractérisé par**:
- un quatrième composant (69) recevant en entrée un sixième signal (64) pour indiquer une valeur de puissance consommée instantanée du véhicule et le deuxième signal (70), agencé pour calculer un cumul énergétique dépensé en fonction de la valeur indiquée par le sixième signal lorsque le deuxième signal indique une demande de surcharge ;
- un cinquième composant (77) recevant en entrée un septième signal (71) pour indiquer le cumul énergétique dépensé calculé, agencé pour générer le cinquième signal (61) indiquant une valeur d'énergie restante de façon à limiter l'énergie utilisable pour la surcharge énergétique en soustrayant le septième signal de la somme du troisième et du quatrième signal, **caractérisé en ce qu'**il comprend :
- un sixième composant (72) agencé pour calculer une puissance utilisable en fonction de l'énergie restante de façon à générer le cinquième signal (61) homogène à une puissance ; ledit sixième composant (72) contenant un premier paramètre qui indique une pleine puissance de surcharge énergétique, un deuxième paramètre qui indique un seuil d'énergie, ledit sixième composant (72) étant agencé pour positionner la puissance utilisable sur le premier paramètre, pour intégrer la puissance utilisable par rapport au temps, pour faire décroître la puissance utilisable jusqu'à zéro lorsque la puissance intégrée franchit le deuxième paramètre de façon à ce que la totalité de la puissance intégrée soit égale à l'énergie utilisable.

4. Dispositif selon la revendication précédente, **caractérisé en ce que** le premier composant (65) est agencé pour estimer le potentiel de récupération à partir de l'énergie cinétique du véhicule.

## Patentansprüche

1. Steuerverfahren einer energetischen Überlast in einem Hybridfahrzeugsystem, das einen Stromspeicher und eine Elektromaschine umfasst, das Folgendes umfasst:
- einen ersten Schritt (604), der durch einen ersten Übergang (603) aktiviert wird, der einen Momentangeschwindigkeitswert des Fahrzeugs angibt, und einen zweiten Übergang (601), der ein Erfassen einer energetischen Überlastanfrage angibt, der geplant wird, um ein Rückgewinnungspotenzial in Abhängigkeit von dem Wert zu schätzen, der von dem ersten Übergang angegeben wird,
- einen zweiten Schritt (608), der durch einen dritten Übergang (607) aktiviert wird, der eine Abwesenheit einer energetischen Überlastanfrage angibt, der geplant wird, um eine in den Energiespeicher nachgeladene Energie zu schätzen;
- einen dritten Schritt (606), der im Anschluss an den ersten Schritt (604) aktiviert wird, der geplant wird, um ein Energielimit, das für die energetische Überlast verwendbar ist, als gleich einer Summe des Rückgewinnungspotenzials und der nachgeladenen Energie zu erzeugen,
**dadurch gekennzeichnet, dass** es Folgendes umfasst:
- einen vierten Schritt (702), der durch einen vierten Übergang (701) aktiviert wird, der ein Erfassen einer energetischen Überlastanfrage angibt, der geplant wird, um eine energetische Summierung zu berechnen, die in Abhängigkeit von einer während der Überlast aufgewandten Leistung aufgewandt wird;
- einen fünften Schritt (704), der im Anschluss an den vierten Schritt (702) aktiviert wird, der geplant wird, um einen Wert restlicher Energie derart zu erzeugen, dass die Energie eingeschränkt wird, die für die energetische Überlast verwendbar ist, indem die aufgewandte energetische Summierung von der Summe des Rückgewinnungspotenzials und der nachgeladenen Energie abgezogen wird, und dass er Folgendes umfasst:
- einen sechsten Schritt (706), der geplant ist, um eine Leistung zu berechnen, die in Abhängigkeit von der restlichen Energie verwendbar ist, bei dem:
- wenn die restliche Energie größer ist als ein Schwellenwert, die verwendbare Leistung maximal ist;
- wenn die restliche Energie geringer ist als der Schwellenwert, die verwendbare Leistung anteilsmäßig zu der restlichen Energie beschränkt wird.

2. Verfahren nach dem vorstehenden Anspruch, **dadurch gekennzeichnet, dass** bei dem ersten Schritt (604) das Rückgewinnungspotenzial ausgehend von der kinetischen Energie des Fahrzeugs geschätzt wird.

3. Vorrichtung zum Steuern einer energetischen Überlast in einem Hybridfahrzeugsystem, das einen Stromspeicher (11) und eine Elektromaschine (53) umfasst, die Folgendes umfasst:
- ein erstes Bauteil (65), das am Eingang ein erstes Signal (62) empfängt, um einen Momentangeschwindigkeitswert des Fahrzeugs anzugeben, und ein zweites Signal (70), um eine Erfassung einer energetischen Überlastanfrage anzugeben, das eingerichtet ist, um ein Rückgewinnungspotenzial in Abhängigkeit von dem Wert zu schätzen, der von dem Signal angegeben wird, wenn das zweite Signal eine Überlastanfrage angibt;
- ein zweites Bauteil (66), das eingerichtet ist, um eine Energie zu schätzen, die vor der energetischen Überlastanfrage nachgeladen wird;
- ein drittes Bauteil (78), das am Eingang ein drittes Signal (67) empfängt, um das geschätzte Rückgewinnungspotenzial anzugeben, und ein viertes Signal (68), um die geschätzte nachgeladene Energie anzugeben, das eingerichtet ist, um ein fünftes Signal (61) derart zu erzeugen, dass eine für die energetische Überlast verwendbare Energie als gleich einer Summe des dritten und des vierten Signals eingeschränkt wird, **gekennzeichnet durch**:
- ein viertes Bauteil (69), das am Eingang ein sechstes Signal (64) empfängt, um einen Wert verbrauchter Momentanleistung des Fahrzeugs anzugeben, und das zweite Signal (70), das eingerichtet ist, um eine energetische Summierung zu berechnen, die in Abhängigkeit von dem Wert aufgewandt wird, der von dem sechsten Signal angegeben wird, wenn das zweite Signal eine Überlastanfrage angibt;
- ein fünftes Bauteil (77), das am Eingang ein siebtes Signal (71) empfängt, um die berechnete aufgewandte energetische Summierung anzugeben, das eingerichtet ist, um das fünfte Signal (61) zu erzeugen, das einen Wert restlicher Energie derart angibt, dass die Energie eingeschränkt wird, die für die energetische Überlast verwendbar ist, indem das siebte Signal von der Summe des dritten und des vierten Signals abgezogen wird, **dadurch gekennzeichnet, dass** es Folgendes umfasst:
- ein sechstes Bauteil (72), das eingerichtet ist, um eine Leistung, die in Abhängigkeit von der restlichen Energie verwendbar ist, derart zu berechnen, dass das fünfte Signal (61) homogen mit einer Leistung erzeugt wird; wobei das sechste Bauteil (72) einen ersten Parameter enthält, der eine volle Leistung energetischer Überlast angibt, einen zweiten Parameter, der einen Energieschwellenwert angibt, wobei das sechste Bauteil (72) eingerichtet ist, um die verwendbare Leistung auf dem ersten Parameter zu positionieren, um die verwendbare Leistung in Bezug auf die Zeit zu integrieren, um die verwendbare Leistung bis null sinken zu lassen, wenn die integrierte Leistung den zweiten Parameter überschreitet, so dass die gesamte integrierte Leistung gleich der verwendbaren Leistung ist.

4. Vorrichtung nach dem vorstehenden Anspruch, **dadurch gekennzeichnet, dass** das erste Bauteil (65) eingerichtet ist, um das Rückgewinnungspotenzial ausgehend von der kinetischen Energie des Fahrzeugs zu schätzen.

## Claims

1. A method for controlling an energy overload in a hybrid vehicle system which comprises an electrical storage and an electric machine, including:
- a first step (604) activated by a first transition (603) indicating an instantaneous speed value of the vehicle and a second transition (601) indicating a detection of an energy overload demand, arranged to estimate a recovery potential as a function of the value indicated by the first transition;
- a second step (608) activated by a third transition (607) indicating an absence of an energy overload demand, arranged to estimate a recharged energy in the electrical storage;
- a third step (606) activated following the first step (604), arranged to generate an energy limit able to be used for the energy overload as being equal to a sum of the recovery potential and of the recharged energy,
**characterized in that** it includes:
- a fourth step (702) activated by a fourth transition (701) indicating a detection of energy overload demand, arranged to calculate an energy accumulation expended as a function of a power expended during the overload;
- a fifth step (704) activated following the fourth step (702), arranged to generate a remaining energy value so as to limit the energy able to be used for the energy overload by subtracting the expended energy accumulation from the sum of the recovery potential and the recharged energy, and **in that** it includes:
- a sixth step (706) arranged to calculate a power able to be used as a function of the remaining energy, in which:
- when the remaining energy is greater than a threshold, the power which is able to be used is maximum;
- when the remaining energy is less than the threshold, the power which is able to be used is limited in a proportional manner to the remaining energy.

2. The method according to the preceding claim, **characterized in that** in the first step (604), the recovery potential is estimated from the kinetic energy of the vehicle.

3. A system for controlling an energy overload in a hybrid vehicle system which comprises an electrical store (11) and an electric machine (53), including:
- a first component (65) receiving at input a first signal (62) to indicate an instantaneous speed value of the vehicle and a second signal (70) to indicate a detection of energy overload demand, arranged to estimate a recovery potential as a function of the value indicated by the first signal when the second signal indicates an overload demand;
- a second component (66) arranged to estimate a recharged energy before the energy overload demand;
- a third component (78) receiving at input a third signal (67) to indicate the estimated recovery potential and a fourth signal (68) to indicate the estimated recharged energy, arranged to generate a fifth signal (61) so as to limit an energy able to be used for the energy overload as being equal to a sum of the third and fourth signal;
**characterized by**:
- a fourth component (69) receiving at input a sixth signal (64) to indicate an instantaneous consumed power value of the vehicle and the second signal (70), arranged to calculate an energy accumulation expended as a function of the value indicated by the sixth signal when the second signal indicates an overload demand;
- a fifth component (77) receiving at input a seventh signal (71) to indicate the calculated expended energy accumulation, arranged to generate the fifth signal (61) indicating a remaining energy value, so as to limit the energy able to be used for the energy overload by subtracting the seventh signal from the sum of the third and fourth signal,
**characterized in that** it includes:
- a sixth component (72) arranged to calculate a power able to be used as a function of the remaining energy so as to generate the fifth signal (61) homogeneous to a power; said sixth component (72) containing a first parameter which indicates a full energy overload power, a second parameter which indicates an energy threshold, said sixth component (72) being arranged to position the power able to be used on the first parameter, to integrate the power able to be used with respect to time, to decrease the power able to be used to zero when the integrated power crosses the second parameter so that the total of the integrated power is equal to the energy able to be used.

4. The system according to the preceding claim, **characterized in that** the first component (65) is arranged to estimate the recovery potential from the kinetic energy of the vehicle.
